# EUROPÄISCHE PATENTANMELDUNG

(11) **EP 1 197 351 A1**
(43) Veröffentlichungstag der Anmeldung: **17.04.2002**
(21) Anmeldenummer: 00122196.9
(22) Anmeldetag: 13.10.2000
(51) Int. Cl.: B44C 1/22, B44C 3/00

(54) **Verfahren zur Herstellung eines Musters auf einem Substrat**

(71) Anmelder: Kissel & Wolf GmbH, D-69168 Wiesloch (DE)
(72) Erfinder: Wittemann, Günter, 69234 Dielheim (DE); Tinsel, Guy, 67460 Souffelweyersheim (FR)
(74) Vertreter: Paul, Dieter-Alfred, Dipl.-Ing.

(57) **Zusammenfassung**

Die Erfindung betrifft ein Verfahren zur Herstellung eines Musters auf einem Substrat, bei dem auf das Substrat zunächst ein polymerer Schutzlack aufgetragen wird und anschließend Teilbereiche des Schutzlacks entfernt und die Oberfläche des Substrats in den Teilbereichen behandelt wird. Das Verfahren ist dadurch gekennzeichnet, daß der Schutzlack in den Teilbereichen mittels eines Lasers weggebrannt wird.

## Beschreibung

Die Erfindung betrifft ein Verfahren zur Herstellung eines Musters auf einem Substrat, bei dem auf das Substrat zunächst ein polymerer Schutzlack aufgetragen wird und anschließend Teilbereiche des Schutzlacks entfernt und die Oberfläche des Substrats in den Teilbereichen behandelt wird.

Zur Herstellung von Bebilderungen, Strukturen oder Mustern auf Substratoberflächen wie Glas, Stein, Kunststoffen, Keramiken, Metallen oder Holz werden auf der Oberflächen des Substrats Masken aus einem Schutzlack erzeugt und dann die Oberfläche mit einem Abrasivstoff sandgestrahlt. Dabei schützt die Maske diejenigen Flächen, die nicht durch den Sandstrahl beaufschlagt werden sollen, während die frei gebliebenen Teilbereiche der Substratoberflächen eine für Sandstrahlen typische Struktur, beispielsweise in Form einer Mattierung, erhalten.

In der DE 199 38 850 A1 ist ein Verfahren zur Herstellung eines Musters auf einem Substrat beschrieben, bei dem ein Schutzlack verwendet wird, der eine Substanz enthält, die den Schutzlack photosensibel macht. Der Schutzlack wird als Flüssigkeit oder mittels Siebdruck auf das Substrat aufgebracht. Anschließend wird der Schutzlack selektiv belichtet, wodurch er an den belichteten Stellen vernetzt und härtet. Die nicht belichteten Teilbereiche werden mittels eines geeigneten Lösungsmittels entfernt, so daß die in diesen Teilbereichen vorhandene Substratoberfläche freigelegt wird. Sie wird dann sandgestrahlt, wobei die Schutzlackmaske diejenigen Bereiche des Substrats schützt, die nicht behandelt werden sollen.

Das vorbeschriebene Verfahren setzt immer die selektive Belichtung des Schutzlackes voraus, was wegen der mit manueller Handarbeit verbundenen Filmmaskenerzeugung umständlich und kostenintensiv ist. Außerdem sind Grenzen bezüglich der Feinheit der Strukturen gegeben.

In der EP 0 672 500 A2 ist ein weiteres Verfahren zur Herstellung von Mustern auf einem Substrat offenbart, bei dem ein sandstrahlresistenter Dispersionslack zur Anwendung kommt. Dieser Dispersionslack wird mittels Siebdruck selektiv auf die zu schützenden Bereiche der Substratoberfläche aufgetragen. Voraussetzung hierfür ist, daß zunächst eine Siebdruckschablone angefertigt wird, was ebenfalls umständlich, zeitraubend und kostenintensiv ist.

Der Erfindung liegt folglich die Aufgabe zugrunde, ein Verfahren der eingangs genannten Art so zu gestalten, daß auch sehr feine Strukturen mit hoher Schnelligkeit und kostengünstig hergestellt werden können.

Diese Aufgabe wird erfindungsgemäß dadurch gelöst, daß der Schutzlack nach dem in der Regel vollflächigen Auftrag auf das Substrat in den Teilbereichen, die behandelt, insbesondere sandgestrahlt werden sollen, mittels eines Lasers weggebrannt wird. Grundgedanke der Erfindung ist es also, den Schutzlack nicht selektiv aufzutragen oder teilweise zu härten und teilweise zu entfernen, sondern den Schutzlack zunächst auch auf die Teilbereiche, die später behandelt werden sollen, aufzutragen und ihn dann in diesen Teilbereichen mittels eines Lasers wegzubrennen. Hierdurch kann die mit manueller Handarbeit verbundene Erstellung entweder einer Filmmaske oder einer Siebdruckschablone vermieden werden. Es hat sich gezeigt, daß das Wegbrennen mittels Lasers mit hoher Geschwindigkeit durchgeführt werden kann und daß auch sehr feine Strukturen erzeugt werden können. Außerdem bietet sich die Möglichkeit der digitalen Bildarchivierung, bei der die Bewegungsdaten des Lasers festgehalten werden. Hierdurch kann ein hoher Automatisierungsgrad und auch eine hohe Flexibilität bei der industriellen Fertigung erzielt werden.

Sofern die Behandlung der freigelegten Teilbereiche des Substrats mittels Sandstrahlen erfolgen soll, versteht es sich, daß der Schutzlack eine solche Zusammensetzung haben muß, daß er einerseits sandstrahlresistent ist, jedoch andererseits mittels eines Lasers weggebrannt werden kann. Als Laser eignet sich beispielsweise ein Yttrium-Aluminium-Granat-Laser, auch abgekürzt YAG-Laser genannt, vorzugsweise mit einer Energieleistung von 300 bis 600 Watt. Es können jedoch auch energiestärkere Laser verwendet werden, bei deren Anwendung die Oberfläche des Substrats beim Wegbrennen des Schutzlacks angegriffen, insbesondere mattiert wird. Dies kann mit Hilfe eines CO₂-Lasers bewirkt werden. Bei Verwendung solcher Laser kann das Sandstrahlen entfallen, da der Laser selbst die Veränderung der freigelegten Oberfläche des Substrats bewirkt.

Sofern eine sehr hohe Abrasionsbeständigkeit beim Sandstrahlen gefordert wird oder die Behandlung der Oberfläche in Ätzbädern erfolgen soll, ist nach einem weiteren Merkmal der Erfindung vorgesehen, daß als Schutzlack ein photosensibler Schutzlack verwendet wird und daß der Schutzlack vor oder nach der Laseranwendung photovernetzt wird, beispielsweise mittels einer dotierten Quecksilberdampflampe. Da der Schutzlack durch die Laseranwendungen in den zu behandelnden Teilbereichen entfernt wird oder schon entfernt ist, ist eine selektive Belichtung des Schutzlackes und damit eine Filmherstellung nicht erforderlich. Das Verfahren ist also auch in solchen Fällen einfach und für die industrielle Herstellung geeignet. Dabei kommen als Substanz, die den Schutzlack photosensibel macht, insbesondere Diazoniumharz in Frage, das mittels Einstrahlung von UV-Licht im Bereich von 360 bis 420 nm vernetzbar ist. Das Diazoniumharz kann beispielsweise ein Diazokondensat sein, daß aus der Gruppe der Kondensate von 4-diazo-diphenyl mit Formaldehyd als aromatischem schwefelsaurem Salz ausgewählt ist.

In der Handhabung von Vorteil ist es zudem, wenn der Schutzlack ein Bindemittel aufweist, das eine Substanz B in einer solchen Konzentration enthält, daß der Schutzlack wasserlöslich, wasserdispergierbar oder wassersuspendierbar ist. Hierzu eigenen sich insbesondere hydorphile Substanzen wie beispielsweise solche, die Hydroxylgruppen enthalten. Die Wasserlöslichkeit hat den Vorteil, daß der Schutzlack, sofern er nicht photovernetz worden ist, durch einfache Wassereinwirkung leicht entfernt werden kann. Ist der Schutzlack mit einer Substanz A versehen und vernetzt worden, kann die Entfernung mittels handelsüblicher Oxidationsmittel erfolgen.

Nach einem weiteren Merkmal der Erfindung ist vorgesehen, daß ein Bindemittel verwendet wird, das eine Substanz C enthält, wobei entsprechende Beispiele den Ansprüchen 12 und 13 zu entnehmen sind. Dabei sollte das Bindemittel eine Mindestfilmtemperatur von 8 bis 55° C aufweisen. Zusätzlich kann der Schutzlack Weichmacher, Additive aus der Gruppe der Entschäumer, Verlaufsmittel und/oder Konservierungsstoffe, Hochsieder, Pigmente und/oder Farbstoffe sowie Emulgatoren, Verdicker, Geliermittel und Füllstoffe enthalten, wie sie den Ansprüchen 15 bis 25 zu entnehmen sind.

Nachstehend sind drei Beispiels des erfindungsgemäßen Schutzlackes aufgeführt, wobei für die einzelnen Substanzen Bereiche angegeben sind, innerhalb derer der Anteil der jeweiligen Substanz schwanken kann. Der Buchstabe T bedeutet dann Gewichtsteile. Es versteht sich, daß innerhalb der angegebenen Bereiche nur Werte in Frage kommen, die in der Summe 100 T ergeben.

### Beispiel 1

| | |
|---|---|
| 30-60 T | Wasser |
| 1-10 T | Gelatine (hydorlysiert) |
| 10-40 T | Acryldispersion |
| 0,2-2 T | Entschäumer |
| 0,1 -1 T | Konservierungsmittel |
| 1-5 T | Calciumcarbonat |
| 0,1-2 T | Metallkomplexfarbstoff |
| 0,3-1 T | Diazokondensat |

### Beispiel 2

| | |
|---|---|
| 10-30 T | Wasser |
| 1-5 T | Polyacrylamid |
| 0,5-5 T | Polyvinylalkohol (teilhydrolysiert) |
| 3-10 T | Carboxylierte Acryldispersion |
| 1-3 T | Fettsäure |
| 1-5 T | Natronlauge |
| 0,1-1 T | Pigmentpräparation (schwarz) |
| 0,2-2 T | Entschäumer |
| 1-5 T | Glycolether |
| 1-5 T | Polyvinylpyrrolidone |
| 0,3-1 T | Diazkondensat |

### Beispiel 3

| | |
|---|---|
| 10-30 T | Wasser |
| 0,5-10 T | Polyvinylalkohol (vollhydrolysiert) |
| 10-60 T | Vinylacetatdispersion (copolymer) |
| 10-30 T | Adipinsäureester |
| 1-10 T | Glycolether |
| 1-5 T | Aktivierte Bentonite |
| 1-3 T | Fettalkoholethoxylat |
| 0,2-2 T | Entschäumer |
| 1-5 T | Glycerin |
| 0,1-5 T | Farbruß |
| 0,3-1 T | Diazokondensat |

## Patentansprüche

1. Verfahren zur Herstellung eines Musters auf einem Substrat, bei dem auf das Substrat zunächst ein polymerer Schutzlack aufgetragen wird und anschließend Teilbereiche des Schutzlacks entfernt und die Oberfläche des Substrats in den Teilbereichen behandelt wird, **dadurch gekennzeichnet, daß** der Schutzlack in den Teilbereichen mittels eines Lasers weggebrannt wird.

2. Verfahren nach Anspruch 1, **dadurch gekennzeichnet, daß** ein sandstrahlresistenter Schutzlack verwendet wird und das Substrat nach Entfernung des Schutzlacks in den Teilbereichen sandgestrahlt wird.

3. Verfahren nach Anspruch 2, **dadurch gekennzeichnet, daß** als Laser ein Yttrium-Aluminium-Granat-Laser (YAG-Laser) mit einer Energieleistung von 300 bis 600 Watt verwendet wird.

4. Verfahren nach Anspruch 1, **dadurch gekennzeichnet, daß** der Schutzlack mit einem solch energiestarken Laser beaufschlagt wird, daß die Oberfläche des Substrats beim Wegbrennen des Schutzlacks angegriffen, insbesondere mattiert wird.

5. Verfahren nach Anspruch 4, **dadurch gekennzeichnet, daß** als Laser ein CO₂-Laser verwendet wird.

6. Verfahren nach einem der Ansprüche 1 bis 5, **dadurch gekennzeichnet, daß** ein Schutzlack verwendet wird, der eine Substanz A enthält, die den Schutzlack photosensibel macht.

7. Verfahren nach Anspruch 6, **dadurch gekennzeichnet, daß** als Substanz A ein Diazoniumharz verwendet wird.

8. Verfahren nach Anspruch 7, **dadurch gekennzeichnet, daß** als Diazoniumharz ein Diazokondensat verwendet wird, das aus der Gruppe der Kondensate von 4-diazodiphenyl mit Formaldehyd als aromatischem schwefelsaurem Salz ausgewählt worden ist.

9. Verfahren nach einem der Ansprüche 1 bis 8, **dadurch gekennzeichnet,** ein Schutzlack mit einem Bindemittel verwendet wird, das eine Substanz B in einer solchen Konzentration enthält, daß der Schutzlack wasserlöslich, wasserdispergierbar oder wasssersuspendierbar ist.

10. Verfahren nach Anspruch 9, **dadurch gekennzeichnet, daß** eine hydrophile Substanz B verwendet wird.

11. Verfahren nach Anspruch 10, **dadurch gekennzeichnet, daß** eine Hydorxylgruppen enthaltende Substanz B verwendet wird.

12. Verfahren nach einem der Ansprüche 7 bis 11, **dadurch gekennzeichnet, daß** ein Bindemittel verwendet wird, das eine Substanz C enthält, die aus der Gruppe der Polyacrylate, Polyesterharze, Epoxidharze, Polyviny- lacetatdisperionsen (Homo- und Copolymerisate), neutralisierbare Naturharze, langkettige Carbonsäuren, homo- und copolymere Vinylacetate, Polyvinylacetatund/oder Acryldispersionen, die zusätzlich copolymerisierte Anteile aus -malinat, -laurat und/oder -versat enthalten.

13. Verfahren nach Anspruch 12, **dadurch gekennzeichnet, daß** als Substanz C eine Modifikation der Acryl- oder Vinylester mit Ethen und/oder Styrol verwendet wird.

14. Verfahren nach einem der Ansprüche 9 bis 13, **dadurch gekennzeichnet, daß** das Bindemittel eine Mindestfilmbildetemperatur von 8 bis 55° C aufweist.

15. Verfahren nach einem der Ansprüche 7 bis 14, **dadurch gekennzeichnet, daß** ein Schutzlack verwendet wird, der einen Weichmacher enthält.

16. Verfahren nach Anspruch 15, **dadurch gekennzeichnet, daß** ein Weichmacher aus der Gruppe der Polyglycole, Adipinsäure-, Zitronensäure-, Benzoesäure-, Phosphorsäure- und/oder Phtalsäureester verwendet wird.

17. Verfahren nach Anspruch 16, **dadurch gekennzeichnet, daß** ein Weichmacher mit einem Anteil von Glycerin und/oder Ricinusöl verwendet wird.

18. Verfahren nach einem der Ansprüche 7 bis 17, **dadurch gekennzeichnet, daß** ein Schutzlack mit Additiven aus der Gruppe der Entschäumer, Verlaufsmittel und/oder Konservierungsstoffe verwendet wird.

19. Verfahren nach einem der Ansprüche 7 bis 18, **dadurch gekennzeichnet, daß** ein Schutzlack verwendet wird, der Hochsieder aus der Gruppe Glycolether und/oder Glycoletherester enthält.

20. Verfahren nach einem der Ansprüche 7 bis 19, **dadurch gekennzeichnet, daß** ein Schutzlack verwendet wird, der Pigmente und/oder Farbstoffe enthält.

21. Verfahren nach Anspruch 20, **dadurch gekennzeichnet, daß** Pigmente verwendet werden, die eine schwarze Einfärbung verursachen.

22. Verfahren nach Anspruch 21, **dadurch gekennzeichnet, daß** Pigmente verwendet werden, die aus der Gruppe der Metallkomplex-, sauren oder basischen Farbstoffe und/oder Pigmente aus der Gruppe der Eisenoxide, Ruße oder organischen Schwarzpigmente ausgewählt sind.

23. Verfahren nach einem der Ansprüche 7 bis 22, **dadurch gekennzeichnet, daß** ein Schutzlack verwendet wird, der Emulgatoren wie zum Beispiel Fettsäuresulfonate, anionische Fettalkoholsulfonate, Polycglycolether oder Ricinusöl enthalten.

24. Verfahren nach einem der Ansprüche 7 bis 23, **dadurch gekennzeichnet, daß** ein Schutzlack verwendet wird, der Verdicker oder Geliermittel wie zum Beispiel organisch modifizierte Smectit-Produkte, aktivierte Bentonite, Schichtsilikate, Acrylpolymere, Alginate, Polyvinylpyrrolidone enthält.

25. Verfahren nach einem der Ansprüche 7 bis 24, **dadurch gekennzeichnet, daß** ein Schutzlack verwendet wird, der Füllstoffe auf Basis der Erdalkalisulfate, -carbonate, Stärken, Kaoline, Kieselsäuren und/oder Titandioxide enthält.
